# EUROPEAN PATENT APPLICATION

(11) **EP 4 236 526 A1**
(43) Date of publication of application: **30.08.2023**
(21) Application number: 20958728.6
(22) Date of filing: 23.10.2020
(51) Int. Cl.: H04W 72/04, H04W 4/44

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2020/039909
(87) International publication number: WO 2022/085179

(57) **Abstract**

A terminal according to an aspect of the present disclosure includes: a receiving section that receives a first higher layer parameter indicating a resource of a first tracking reference signal (TRS) and a second higher layer parameter indicating a resource of a second TRS; and a control section that controls reception of at least one of a physical downlink control channel and a physical downlink shared channel based on the first TRS and the second TRS, in which a quasi-co-location relationship between the first TRS and the second TRS does not include a Doppler shift. According to one aspect of the present disclosure, downlink signals from a plurality of transmission points can be appropriately received.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (Non Patent Literature 1). Furthermore, the specifications of LTE-Advanced (3GPP Rel. 10 to 14) have been drafted for the purpose of further increasing capacity and advancement of LTE (third generation partnership project (3GPP) release (Rel.) 8 and 9).

Successor systems to LTE (for example, also called 5th generation mobile communication system (5G), 5G+ (plus), 6th generation mobile communication system (6G), New Radio (NR), or 3GPP Rel. 15 and subsequent releases) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In future radio communication systems (for example, the NR), it is assumed that a beam transmitted from a transmission point (for example, a remote radio head (RRH)) arranged in a path of a moving object (for example, a train or the like) is used to implement radio communication in a moving object moving at a high speed.

However, how the terminal receives downlink signals transmitted from a plurality of transmission points has not been thoroughly studied. If such an operation is not clear, there is a concern that a decrease in throughput or the like may be caused.

Therefore, an object of the present disclosure is to provide a terminal, a radio communication method, and a base station that appropriately receive downlink signals from a plurality of transmission points.

### Solution to Problem

A terminal according to an aspect of the present disclosure includes: a receiving section that receives a first higher layer parameter indicating a resource of a first tracking reference signal (TRS) and a second higher layer parameter indicating a resource of a second TRS; and a control section that controls reception of at least one of a physical downlink control channel and a physical downlink shared channel based on the first TRS and the second TRS, in which a quasi-co-location relationship between the first TRS and the second TRS does not include a Doppler shift.

### Advantageous Effects of Invention

According to one aspect of the present disclosure, downlink signals from a plurality of transmission points can be appropriately received.

### Brief Description of Drawings

[FIG. 1] Figs. 1A and 1B are diagrams illustrating an example of communication between a moving object and a transmission point (for example, an RRH).
[FIG. 2] Figs. 2A to 2C are diagrams illustrating examples of Schemes 0 to 2 regarding an SFN.
[FIG. 3] Figs. 3A and 3B are diagrams illustrating an example of a first embodiment.
[FIG. 4] Figs. 4A and 4B are diagrams illustrating an example of a second embodiment.
[FIG. 5] Fig. 5 is a diagram illustrating an example of Aspect 3-2.
[FIG. 6] Figs. 6A and 6B are diagrams illustrating an example of Aspect 3-3.
[FIG. 7] Fig. 7 is a diagram illustrating an example of a TCI state according to a fourth embodiment.
[FIG. 8] Figs. 8A and 8B are diagrams illustrating an example of a default TCI state according to the fourth embodiment.
[FIG. 9] Fig. 9 is a diagram illustrating an example of a schematic configuration of a radio communication system according to one embodiment.
[FIG. 10] Fig. 10 is a diagram illustrating an example of a configuration of a base station according to one embodiment.
[FIG. 11] Fig. 11 is a diagram illustrating an example of a configuration of a user terminal according to one embodiment.
[FIG. 12] Fig. 12 is a diagram illustrating an example of a hardware configuration of a base station and a user terminal according to one embodiment.

### Description of Embodiments

### (TCI, Spatial Relation, and QCL)

In NR, controlling reception processing (for example, at least one of reception, demapping, demodulation, and decoding) and transmission processing (for example, at least one of transmission, mapping, precoding, modulation, and coding) in a UE of at least one of a signal and a channel (expressed as a signal/channel) based on a transmission configuration indication state (TCI state) is being studied.

The TCI state may represent what is applied to a downlink signal/channel. A state corresponding to the TCI state applied to an uplink signal/channel may be expressed as a spatial relation.

The TCI state is information regarding a quasi-co-location (QCL) of the signal/channel and may also be called a spatial Rx parameter, spatial relation information, or the like. The TCI state may be configured in the UE for each channel or each signal.

The QCL is an indicator indicating a statistical property of the signal/channel. For example, this may mean that, when a given signal/channel and another signal/channel have a QCL relationship, it may be assumed that at least one of a Doppler shift, a Doppler spread, an average delay, a delay spread, and a spatial parameter (for example, the spatial Rx parameter) is the same (the QCL for at least one of the foregoing) between the plurality of different signals/channels.

Note that the spatial Rx parameter may correspond to a UE reception beam (for example, a reception analog beam), and the beam may be specified based on a spatial QCL. A QCL (or at least one element of the QCL) in the present disclosure is interchangeable with a spatial QCL (sQCL).

A plurality of types of QCL (QCL types) may be defined. For example, parameters (or parameter sets) of four different QCL types A to D that can be assumed to be identical may be provided, and the corresponding parameters (which may be called QCL parameters) are described as follows:
- QCL type A (QCL-A): Doppler shift, Doppler spread, average delay, and delay spread;
- QCL type B (QCL-B): Doppler shift and Doppler spread;
- QCL type C (QCL-C): Doppler shift and average delay; and
- QCL type D (QCL-D): spatial Rx parameter.

It may be called a QCL assumption for the UE to assume that a given control resource set (CORESET), channel, or reference signal has a specific QCL (for example, QCL type D) relationship with another CORESET, channel, or reference signal.

Based on a TCI state of the signal/channel or the QCL assumption, the UE may also determine at least one of a transmission beam (Tx beam) and a reception beam (Rx beam) of the corresponding signal/channel.

The TCI state may be, for example, information regarding the QCL of a target channel (in other words, a reference signal (RS) for the corresponding channel) and another signal (for example, another RS). The TCI state may be configured (indicated) by higher layer signaling, physical layer signaling, or a combination thereof.

The physical layer signaling may be, for example, downlink control information (DCI).

A channel for which a TCI state or spatial relation is configured (specified) may be, for example, at least one of a physical downlink shared channel (PDSCH), a physical downlink control channel (PDCCH), a physical uplink shared channel (PUSCH), and a physical uplink control channel (PUCCH).

Furthermore, an RS having a QCL relationship with the channel may be, for example, at least one of a synchronization signal block (SSB), a channel state information reference signal (CSI-RS), a sounding reference signal (SRS), a tracking CSI-RS (also called a tracking reference signal (TRS)), and a QCL detection reference signal (also called a QRS).

The SSB is a signal block including at least one of a primary synchronization signal (PSS), a secondary synchronization signal (SSS), and a broadcast channel (physical broadcast channel (PBCH)). The SSB may be called an SS/PBCH block.

An RS of QCL type X in a TCI state may mean an RS in a QCL type X relationship with (DMRS of) a given channel/signal, and this RS may be called a QCL source of the QCL type X in the corresponding TCI state.

A QCL type A RS is always configured for the PDCCH and the PDSCH, and a QCL type D RS may be additionally configured. Since it is difficult to estimate the Doppler shift, a delay, and the like by receiving a oneshot DMRS, the QCL type A RS is used to improve channel estimation accuracy. The QCL type D RS is used for reception beam determination at the time of DMRS reception.

For example, TRSs 1-1, 1-2, 1-3, and 1-4 are transmitted, and a notification of TRS 1-1 is given as a QCL type C/D RS by the TCI state of the PDSCH. By being notified of the TCI state, the UE can use the information obtained from the results of the past periodic reception/measurement of TRS 1-1 for reception/channel estimation of a PDSCH DMRS. In this case, the QCL source of the PDSCH is TRS 1-1, and a QCL target is the PDSCH DMRS.

### (Default TCI State/Default Spatial Relation/Default PL-RS)

In an RRC connection mode, both in a case where in-DCI TCI information (higher layer parameter TCI-PresentInDCI) is set to "enabled" and in a case where no in-DCI TCI information is configured, if the time offset between the reception of DL DCI (DCI that schedules a PDSCH) and the corresponding PDSCH (the PDSCH scheduled by the corresponding DCI) is smaller than a threshold (timeDurationForQCL) (application condition, a first condition), in the case of non-cross-carrier scheduling, the TCI state (a default TCI state) of the PDSCH may be a TCI state of the lowest CORESET ID in the newest slot in an active DL BWP of the CC (of a specific UL signal). Otherwise, the TCI state of the PDSCH (default TCI state) may be a TCI state of the lowest TCI state ID of the PDSCH in the active DL BWP of the scheduled CC.

In Rel. 15, individual MAC CEs including a MAC CE for activation/deactivation of a PUCCH spatial relation and a MAC CE for activation/deactivation of an SRS spatial relation are required. The PUSCH spatial relation conforms to the SRS spatial relation.

In Rel. 16, at least one of the MAC CE for activation/deactivation of the PUCCH spatial relation and the MAC CE for activation/deactivation of the SRS spatial relation does not have to be used.

In FR2, if both the spatial relation and the PL-RS for the PUCCH are not configured (application condition, a second condition), the default assumption of the spatial relation and the PL-RS (the default spatial relation and the default PL-RS) is applied to the PUCCH. In FR2, if neither a spatial relation nor a PL-RS for an SRS (an SRS resource for an SRS, or an SRS resource corresponding to an SRI in DCI format 0_1 that schedules a PUSCH) is not configured (application condition, the second condition), default assumptions of the spatial relation and the PL-RS (a default spatial relation and a default PL-RS) are applied to the PUSCH scheduled by DCI format 0_1 and the SRS.

If the CORESET is configured in the active DL BWP on the CC (application condition), the default spatial relation and the default PL-RS may be in a TCI state or the QCL assumption of the CORESET having the lowest CORESET ID in the corresponding active DL BWP. If the CORESET is not configured in the active DL BWP on the CC, the default spatial relation and the default PL-RS may be in an active TCI state having the lowest ID of the PDSCH in the corresponding active DL BWP.

In Rel. 15, a spatial relation of a PUSCH scheduled by DCI format 0_0 follows a spatial relation of a PUCCH resource having the lowest PUCCH resource ID among active spatial relations of PUCCHs on the same CC. Even in a case where no PUCCHs are transmitted on SCells, the network is required to update the PUCCH spatial relations on all SCells.

In Rel. 16, a PUCCH configuration for the PUSCH scheduled by the DCI format 0_0 is not required. For the PUSCH scheduled by the DCI format 0_0, when there is no active PUCCH spatial relation or no PUCCH resource on the active UL BWP in the CC (application condition, the second condition), the default spatial relation and the default PL-RS are applied to the corresponding PUSCH.

The application condition of the default spatial relation and the default PL-RS for the SRS may include the fact that a default beam path-loss enable information element for the SRS (higher layer parameter enableDefaultBeamPlForSRS) is set to be enabled. The application condition of the default spatial relation and the default PL-RS for the PUCCH may include the fact that a default beam path-loss enable information element for the PUCCH (higher layer parameter enableDefaultBeamPlForPUCCH) is set to be enabled. The application condition of the default spatial relation and the default PL-RS for the PUSCH scheduled by the DCI format 0_0 may include the fact that a default beam path-loss activation information element for the PUSCH (higher layer parameter enableDefaultBeamPlForPUSCH0_0) scheduled by the DCI format 0_0 is set to be enabled.

Further, the above-mentioned threshold may be called QCL time duration "timeDurationForQCL", "threshold", "threshold for the offset between a DCI indicating a TCI state and PDSCH scheduled by the DCI", "Threshold-Sched-Offset", a schedule offset threshold, a scheduling offset threshold, or the like.

When the offset between the reception of DL DCI and the corresponding PDSCH is smaller than the threshold timeDurationForQCL, at least one TCI state configured for the serving cell of the scheduled PDSCH includes "QCL type D", the UE is configured with two default TCI enable parameters (enableTwoDefaultTCIStates-r16), and at least one TCI codepoint indicates two TCI states, the UE assumes that the DMRS port of the PDSCH or PDSCH transmission occasion of the serving cell is quasi co-located with RS regarding QCL parameters associated with two TCI states corresponding to the lowest one of the TCI codepoints including two different TCI states. The two default TCI enable parameters indicate that the operation in Rel. 16 in two default TCI states for PDSCH is enabled when at least one TCI codepoint is mapped to the two TCI states.

### (Multi-TRPs)

In NR, it is considered that one or a plurality of transmission/reception points (TRPs) (multi-TRPs (MTRP)) perform DL transmission to the UE by using one or a plurality of panels (multipanels). In addition, it is considered that the UE performs the UL transmission to one or the plurality of TRPs using one or the plurality of panels.

Note that the plurality of TRPs may correspond to the same cell identifier (ID) or may correspond to different cell IDs. The corresponding cell ID may be a physical cell ID or a virtual cell ID.

The multi-TRPs (for example, TRPs #1 and #2) are connected by an ideal/non-ideal backhaul, and information, data, and the like may be exchanged. A different codeword (CW) and a different layer may be transmitted from each TRP of the multi-TRPs. Non-coherent joint transmission (NCJT) may be used as one form of multi-TRPs transmission.

In the NCJT, for example, TRP #1 performs modulation mapping and layer mapping on a first codeword and transmits a first PDSCH by using first precoding in a first number of layers (for example, two layers). In addition, TRP #2 performs modulation mapping and layer mapping on a second codeword and transmits a second PDSCH by using second precoding in a second number of layers (for example, two layers).

Note that a plurality of PDSCHs (multiple PDSCHs) subjected to NCJT may be defined as partially or completely overlapping with respect to at least one of a time domain and a frequency domain. That is, the first PDSCH from a first TRP and the second PDSCH from a second TRP may overlap with respect to at least one of a time resource and a frequency resource.

The first PDSCH and the second PDSCH may be assumed not to be in a quasi-co-location (QCL) relationship (not to be quasi-co-located). Reception of the multiple PDSCHs is interchangeable with the simultaneous reception of PDSCHs that are not of a given QCL type (for example, QCL type D) .

The plurality of PDSCHs (which may be called multiple PDSCHs) from the multi-TRPs may be scheduled by using one piece of DCI (single DCI or single PDCCH) (single master mode or single-DCI-based multi-TRPs). When each of the plurality of PDSCHs from the multi-TRPs may be scheduled by using a plurality of pieces of DCI (multi-DCIs or multiple PDCCHs) (multimaster mode or multi-DCIs based multi-TRPs).

In URLLC for the multi-TRPs, support of PDSCH (transport block (TB) or codeword (CW)) repetition across the multi-TRPs has been studied. Support for repetition methods (URLLC schemes, for example, Schemes 1, 2a, 2b, 3, and 4) across the multi-TRPs on a frequency domain, a layer (spatial) domain, or a time domain has been studied. In Scheme 1, multiple PDSCHs from the multi-TRPs are subjected to space division multiplexing (SDM). In Schemes 2a and 2b, PDSCHs from the multi-TRPs are subjected to frequency division multiplexing (FDM). In Scheme 2a, the redundancy version (RV) is the same for the multi-TRPs. In Scheme 2b, the RVs may be the same or different for the multi-TRPs. In Schemes 3 and 4, the multiple PDSCHs from the multi-TRPs are subjected to time division multiplexing (TDM). In Scheme 3, the multiple PDSCHs from the multi-TRPs are transmitted in one slot. In Scheme 4, the multiple PDSCHs from the multi-TRPs are transmitted in different slots.

Such a multi-TRPs scenario can perform more flexible transmission control using a high-quality channel.

In RRC configuration information for linking a plurality of pairs of PDCCHs and PDSCHs having a plurality of TRPs, one control resource set (CORESET) in PDCCH configuration information (PDCCH-Config) may correspond to one TRP, to support intra-cell (having the same cell ID) and inter-cell (having different cell IDs) multi-TRPs transmission based on the plurality of PDCCHs.

### (HST)

In LTE, it is difficult to arrange an HST in a tunnel. A large antenna performs transmission out of/into the tunnel. For example, the transmission power of the large antenna is about 1 to 5 W. For handover, it is important that the UE performs transmission out of the tunnel before entering the tunnel. For example, the transmission power of a small antenna is about 250 mW. A plurality of small antennas (transmission/reception points) having the same cell ID and a distance of 300 m form a single frequency network (SFN). All small antennas in the SFN transmit the same signal at the same time on the same PRB. It is assumed that a terminal performs transmission and reception to and from one base station. Actually, a plurality of transmission/reception points transmit the same DL signal. During high-speed movement, transmission/reception points in units of several kilometers form one cell. Handover is performed in a case of crossing cells. As a result, the handover frequency can be reduced.

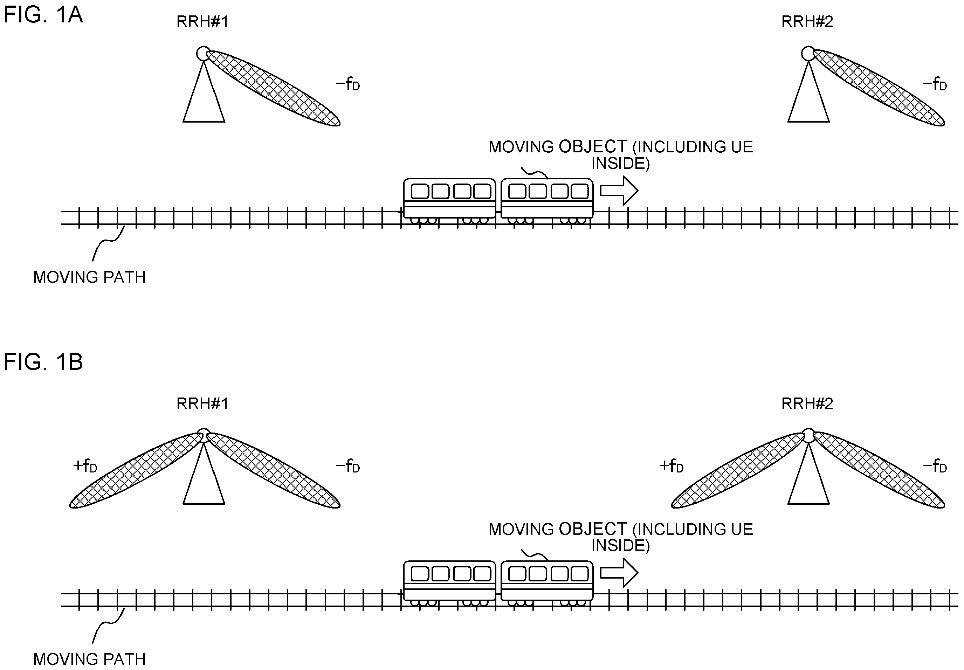

In the NR, it is assumed that a beam transmitted from a transmission point (for example, an RRH) is used to communicate with a terminal (hereinafter, also called the UE) included in a moving object such as a high speed train (HST). In an existing system (for example, Rel. 15), communication with the moving object is supported by transmitting a uni-directional beam from the RRH (see Fig. 1A).

Fig. 1A illustrates a case where RRHs are installed along a moving path (alternatively, a moving direction, a traveling direction, and a traveling path) of the moving object, and a beam is formed from each RRH on a traveling direction side of the moving object. The RRH that forms the uni-directional beam may be called a uni-directional RRH. In the example illustrated in Fig. 1A, the moving object receives a negative Doppler shift (-f_{D}) from each RRH.

Note that, although the case where the beam is formed on the traveling direction side of the moving object is illustrated, the present invention is not limited thereto, and the beam may be formed on the side opposite to the traveling direction, or the beam may be formed in any direction regardless of the traveling direction of the moving object.

In Rel. 16 and subsequent releases, it is also assumed that a plurality of (for example, two or more) beams are transmitted from the RRH. For example, it is assumed that beams are formed in both the traveling direction of the moving object and the direction opposite to the traveling direction (see Fig. 1B).

Fig. 1B illustrates a case where RRHs are installed along the moving path of the moving object, and beams are formed from each RRH on both the traveling direction side of the moving object and the side opposite to the traveling direction. The RRH that forms beams in a plurality of directions (for example, two directions) may be called bidirectional RRH.

In the example of Fig. 1B, in a case where two RRHs (here, RRH #1 and RRH #2) use the SFN, the moving object switches from a signal subjected to a negative Doppler shift to a signal subjected to a positive Doppler shift with a higher power in the middle of the two RRHs. In this case, the change width of the maximum Doppler shift that requires correction is changed from -f_{D} to +f_{D}, which is twice as large as that in the case of the uni-directional RRH.

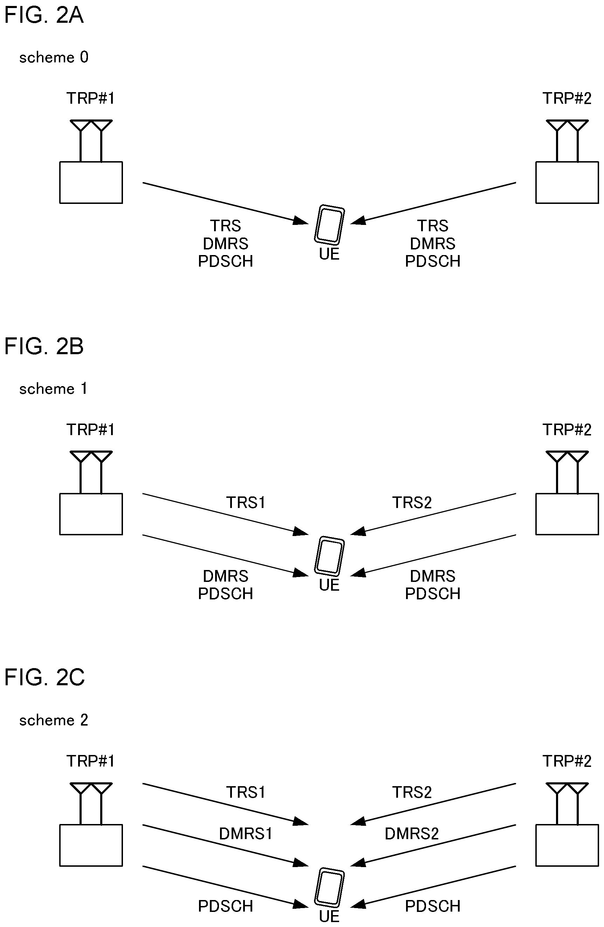

Here, the following Scheme 0 to Scheme 2 are compared. In Scheme 0 of Fig. 2A, the tracking reference signal (TRS), the DMRS, and the PDSCH are transmitted to two TRPs (RRHs) commonly (using the same time/frequency resources) (normal SFN or transparent SFN). In Scheme 1 of Fig. 2B, the TRS is transmitted TRP-specifically (using different time/frequency resources depending on the TRP). In this example, a TRS1 is transmitted from TRP #1, and a TRS2 is transmitted from TRP #2. In Scheme 2 of Fig. 2C, the TRS and the DMRS are transmitted TRP-specifically. In this example, the TRS1 and the DMRS1 are transmitted from TRP #1, and the TRS2 and the DMRS2 are transmitted from TRP #2. Compared with Scheme 0, Schemes 1 and 2 can suppress a sudden change in the Doppler shift and appropriately estimate/guarantee the Doppler shift. Since the DMRS of Scheme 2 is more than that of Scheme 1, the maximum throughput of Scheme 2 is lower than that of Scheme 1.

However, an indication method of the scheme 1/2 to distinguish from a transmission scheme that has a plurality of QCL/TCI states and is not the SFN is not clear.

Therefore, the present inventors have conceived a method for appropriately receiving RSs from a plurality of transmission points.

Hereinafter, embodiments according to the present disclosure are described in detail with reference to the drawings. Radio communication methods according to the respective embodiments may be applied independently or may be applied in combination.

In the present disclosure, "A/B/C" and "at least one of A, B, and C" are interchangeable. In the present disclosure, a cell, a serving cell, a CC, a carrier, a BWP, a DL BWP, a UL BWP, an active DL BWP, an active UL BWP, and a band are interchangeable. In the present disclosure, an index, an ID, an indicator, and a resource ID are interchangeable. In the present disclosure, supporting, controlling, being controllable, operating, and being operable are interchangeable.

In the present disclosure, configuring, activating, updating, indicating, enabling, specifying, and selecting are interchangeable.

In the present disclosure, the higher layer signaling may be any of, for example, radio resource control (RRC) signaling, medium access control (MAC) signaling, and broadcast information, or a combination thereof. In the present disclosure, an RRC, RRC signaling, an RRC parameter, a higher layer, a higher layer parameter, an RRC information element (IE), and an RRC message are interchangeable.

For example, a MAC control element (MAC CE) or a MAC protocol data unit (PDU) may be used for the MAC signaling. The broadcast information may be, for example, a master information block (MIB), a system information block (SIB), remaining minimum system information (RMSI), or other system information (OSI).

In the present disclosure, MAC CE and activation/deactivation command are interchangeable.

In the present disclosure, a beam, a spatial domain filter, a spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE reception beam, a DL beam, a DL reception beam, DL precoding, a DL precoder, a DL-RS, a QCL type D RS of TCI state/QCL assumption, a QCL type A RS of the TCI state/QCL assumption, a spatial relation, a spatial domain transmission filter, a UE spatial domain transmission filter, a UE transmission beam, a UL beam, a UL transmission beam, UL precoding, a UL precoder, and a PL-RS are interchangeable. In the present disclosure, a QCL type X-RS, a DL-RS associated with QCL type X, a DL-RS with QCL type X, a DL-RS source, the SSB, the CSI-RS, and the SRS are interchangeable.

In the present disclosure, the panel, an uplink (UL) transmission entity, the TRP, the spatial relation, the control resource set (CORESET), the PDSCH, a codeword, a base station, an antenna port (for example, a demodulation reference signal (DMRS) port) of a signal, an antenna port group (for example, a DMRS port group) of a signal, a group for multiplexing (for example, a code division multiplexing (CDM) group, a reference signal group, and a CORESET group), a CORESET pool, a CW, a redundancy version (RV), and a layer (a MIMO layer, a transmission layer, and a spatial layer) are interchangeable. Further, a panel identifier (ID) and the panel are interchangeable. In the present disclosure, a TRP ID and the TRP are interchangeable.

In the present disclosure, the TRP, the transmission point, the panel, the DMRS port group, the CORESET pool, and one of two TCI states associated with one codepoint of a TCI field are interchangeable.

In the present disclosure, a single TRP, a single TRP system, single TRP transmission, and a single PDSCH are interchangeable. In the present disclosure, the multi-TRPs, the multi-TRPs system, the multi-TRPs transmission, and the multiple PDSCHs are interchangeable. In the present disclosure, the single DCI, the single PDCCH, the single-DCI-based multi-TRPs, and activation of two TCI states on at least one TCI codepoint are interchangeable.

In the present disclosure, the single TRP, a channel using the single TRP, a channel using one TCI state/spatial relation, the fact that the multi-TRPs are not enabled by the RRC/DCI, the fact that a plurality of TCI states/spatial relations are not enabled by the RRC/DCI, and the fact that a CORESET pool index (CORESETPoolIndex) value of 1 is not configured for any CORESET and no codepoint in the TCI field is mapped to two TCI states are interchangeable.

In the present disclosure, the multi-TRPs, a channel using the multi-TRPs, a channel using the plurality of TCI states/spatial relations, the fact that the multi-TRPs are enabled by the RRC/DCI, the fact that the plurality of TCI states/spatial relations are enabled by the RRC/DCI, and at least one of the single-DCI-based multi-TRPs and the multi-DCIs-based multi-TRPs are interchangeable. In the present disclosure, the multi-DCIs-based multi-TRPs and the fact that the CORESET pool index (CORESETPoolIndex) value of 1 is configured for the CORESET are interchangeable. In the present disclosure, the single-DCI-based multi-TRPs and the fact that at least one codepoint of the TCI field is mapped to two TCI states are interchangeable.

In the present disclosure, TRP #1 (first TRP) may correspond to the CORESET pool index = 0 or may correspond to the first TCI state of two TCI states corresponding to one codepoint of the TCI field. TRP #2 (second TRP) and TRP #1 (first TRP) may correspond to the CORESET pool index = 1 or may correspond to the second TCI state of two TCI states corresponding to one codepoint of the TCI field.

In the present disclosure, a CSI-RS, an NZP-CSI-RS, a periodic (P)-CSI-RS, a P-TRS, a semi-persistent (SP)-CSI-RS, an aperiodic (A)-CSI-RS, a TRS, a tracking CSI-RS, a CSI-RS with TRS information (higher layer parameter trs-Info), an NZP CSI-RS resource in an NZP CSI-RS resource set with TRS information, and an NZP-CSI-RS resource in an NZP-CSI-RS resource set including a plurality of NZP-CSI-RS resources of the same antenna port are interchangeable. In the present disclosure, a CSI-RS resource, a CSI-RS resource set, a CSI-RS resource group, and an information element (IE) are interchangeable.

In the present disclosure, a DMRS, a DMRS port, and an antenna port are interchangeable.

### (Radio Communication Method)

### <First Embodiment>

Both Scheme 1 and Scheme 2 may be defined in the specification.

When Scheme 1/Scheme 2 is configured by higher layer parameters, it may be defined that the UE is assumed to receive a plurality of TRP-specific TRSs.

The UE that configures Scheme 1/Scheme 2 may estimate/correct the Doppler shift by using the TRS corresponding to each TRP and receive the PDCCH/PDSCH by using estimation/correction results.

When at least one specific TRS (additional TRS, extended TRS, second TRS, or new TRS) or a specific TRS resource (additional TRS resource, additional TRS resource set, or additional NZP-CSI-RS resource set) is configured by the higher layer parameter, it may be defined that the UE is assumed to receive a plurality of TRP-specific TRSs and estimates/guarantees the Doppler shift.

The UE may be configured with (may receive) a higher layer parameter (first higher layer parameter or NZP-CSI-RS resource set) indicating a resource of the TRS of Rel. 15/16 and a higher layer parameter (a second higher layer parameter, for example, an NZP-CSI-RS resource set) indicating a resource of the specific TRS. The higher layer parameter indicating the resource of the specific TRS may be a parameter different from the NZP-CSI-RS resource set of Rel. 15/16 or may be an NZP-CSI-RS resource set including a parameter different from the parameter of Rel. 15/16.

In the present disclosure, the fact that the TRP-specific TRS is received, the fact that the Doppler shifts between the existing (Rel. 15/16) TRS and the specific TRS are not retained (not identical), the fact that RSs of a specific QCL type between the existing TRS and the specific TRS are not identical, and the fact that the QCL relationship (QCL type) between the existing TRS and the specific TRS does not include the Doppler shift are interchangeable.

A new QCL type (for example, QCL type E) may be defined for TRP-specific TRS/specific TRS notification. A QCL type E relationship may be that Doppler shifts are different and reception spatial domain filters are the same.

The existing TRSs may be transmitted commonly (using the same time/frequency resources from the plurality of TRPs) from the plurality of TRPs (may be shared by the plurality of TRPs). The specific TRS may be transmitted TRP-specifically (from one TRP, using different time/frequency resources from other TRPs) (may not be shared by the plurality of TRPs).

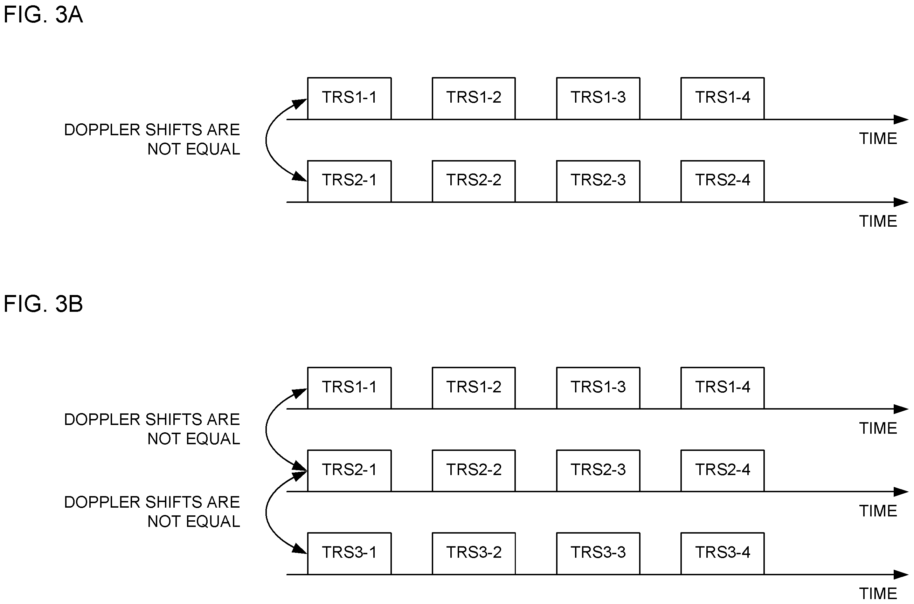

In the example of Fig. 3A, TRSs 1-1 to 1-4 are transmitted as existing TRSs, and TRSs 2-1 to 2-4 are transmitted as specific TRSs. TRS 1-1 and TRS 2-1 may be in a QCL type E relationship.

The specific TRS may be configured for each TRP. The specific TRS may be transmitted from a corresponding TRP.

In the example of Fig. 3B, TRPs #1 and #2 are TRPs before and after the HST. TRSs 1-1 to 1-4 are transmitted as existing TRSs (TRP #1 and TRP #2), TRSs 2-1 to 2-4 are transmitted as specific TRSs for TRP #1, and TRSs 3-1 to 3-4 are transmitted as specific TRSs for TRP #2. TRS 1-1 and TRS 2-1 may be in a QCL type E relationship. TRS 2-1 and TRS 3-1 may be in a QCL type E relationship. TRS 1-1 and TRS 3-1 may be in a QCL type E relationship.

TRSs 1-1 to 1-4 may be transmitted from TRPs #1 and #2. TRSs 2-1 to 2-4 may be transmitted from TRP #1. TRSs 3-1 to 3-4 may be transmitted from TRP #2. Time/frequency resources of TRP 1-1 and time/frequency resources of TRP 2-1 may be different from each other. The time/frequency resources of TRP 2-1 and time/frequency resources of TRP 3-1 may be different from each other. The time/frequency resources of TRP 1-1 and the time/frequency resources of TRP 3-1 may be different from each other.

An existing QCL type (for example, QCL type C/D) may be used for TRP-specific TRS/specific TRS notification. A QCL type C relationship may indicate that the Doppler shifts are the same and a QCL type D relationship may indicate that the reception spatial domain filters are the same. In the example of Fig. 3B, TRSs 1-1 and 2-1 may be in a QCL type D relationship instead of a QCL type C relationship. TRSs 2-1 and 3-1 may be in a QCL type D relationship instead of a QCL type C relationship. TRSs 1-1 and 3-1 may be in a QCL type D relationship instead of a QCL type C relationship.

According to the first embodiment described above, the UE can appropriately receive TRS for each TRP.

### <Second Embodiment>

Since TRP-specific TRS improves the accuracy of Doppler shift estimation, Schemes 1 and 2 have better performance by the transparent SFN. Hereinafter, backward compatibility from Rel. 15 TRS is considered. The network (NW, for example, a base station) supports Rel. 15 UE and transmits Rel. 15 TRS with the transparent SFN. If the TRP-specific TRS in Rel. 17 and subsequent releases is not shared with the Rel. 15 TRS, the TRP-specific TRS increases the TRS overhead.

M QCLs (QCLs for each TRP) may be supported for multiple TRPs with non-transparent SFN (non-SFN). In this case, the TRS may be according to any of Aspects 2-1 and 2-2 below.

### <<Aspect 2-1>>

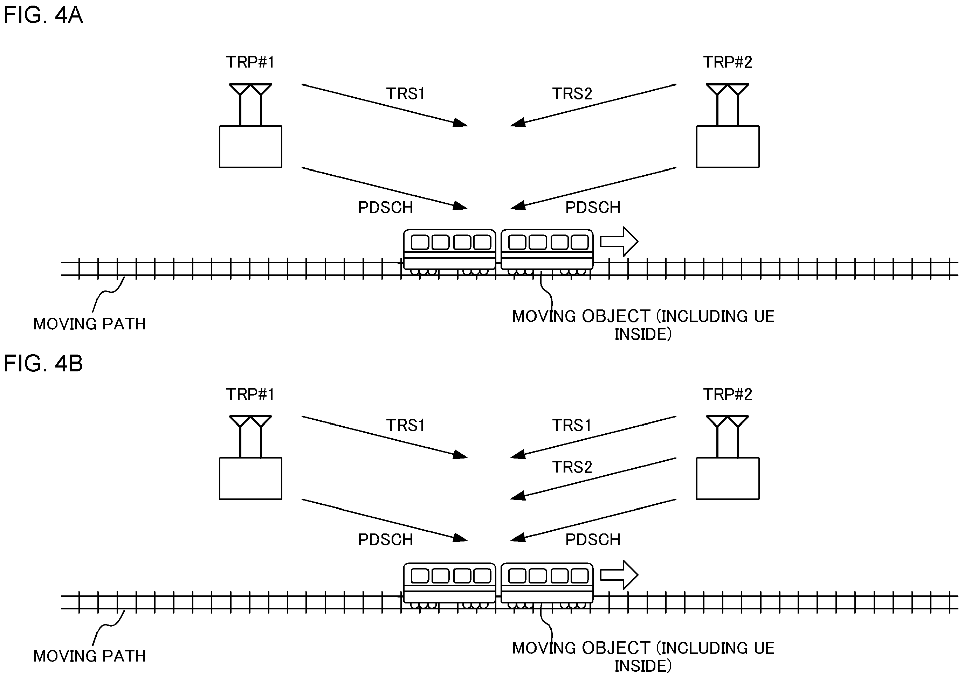

M TRSs of TRP-specific/non-transparent SFN may be transmitted. To support Rel. 15, a TRS of a transparent SFN may be added. In total, M + 1 TRSs may be transmitted. In the example of Fig. 4A, TRP #1 transmits the TRS1, and TRP #2 transmits the TRS2 (TRP-specific TRS).

### <<Aspect 2-2>>

M-1 TRSs of TRP-specific/non-transparent SFN may be transmitted, and 1 TRS of the transparent SFN may be transmitted. This one TRS may be shared with the Rel. 15 UE. In total, M TRSs may be transmitted. In the example of Fig. 4B, TRP #1 and TRP #2 transmit the TRS1 (transparent SFN), and TRP #2 further transmits the TRS2 (TRP-specific TRS). The TRS1 is transmitted by SFN of Rel. 15 and thus can be shared with the TRS for a Rel. 15/16 UE. A UE that supports this aspect uses the TRSs 1 and 2 to estimate/correct the Doppler shift.

According to the second embodiment described above, the UE can appropriately receive the TRS for each TRP.

### <Third Embodiment>

The UE that configures Scheme 2 may estimate/correct the Doppler shift by using the TRS and DMRS corresponding to each TRP and receive the PDCCH/PDSCH by using estimation/correction results.

A configuration method of Scheme 2 may be according to any one of Aspects 3-1 to 3-3 below.

### <<Aspect 3-1>>

Scheme 2 may be explicitly configured by higher layer parameters.

### <<Aspect 3-2>>

Similar to the specific TRS of the first embodiment, a specific DMRS (additional DMRS, TRP-specific DMRS, DMRS for specific TRP, additional DMRS resource, extended DMRS, second DMRS, or new DMRS) may be configured. The specific DMRS for PDSCH may be configured in the PDSCH configuration (PDSCH-Config, DMRS-DownlinkConfig, DMRS-AdditionalPosition). The specific DMRS for PDCCH may be configured in the PDCCH setting (PDCCH-Config).

In the present disclosure, the fact that the TRP-specific DMRS is received, the fact that the Doppler shifts between the existing (Rel. 15/16) DMRS and the specific DMRS are not retained (not identical), the fact that the RSs of the specific QCL type between the existing DMRS and the specific DMRS are not identical, and the fact that the QCL relationship (QCL type) between the existing DMRS and the specific DMRS does not include the Doppler shift are interchangeable.

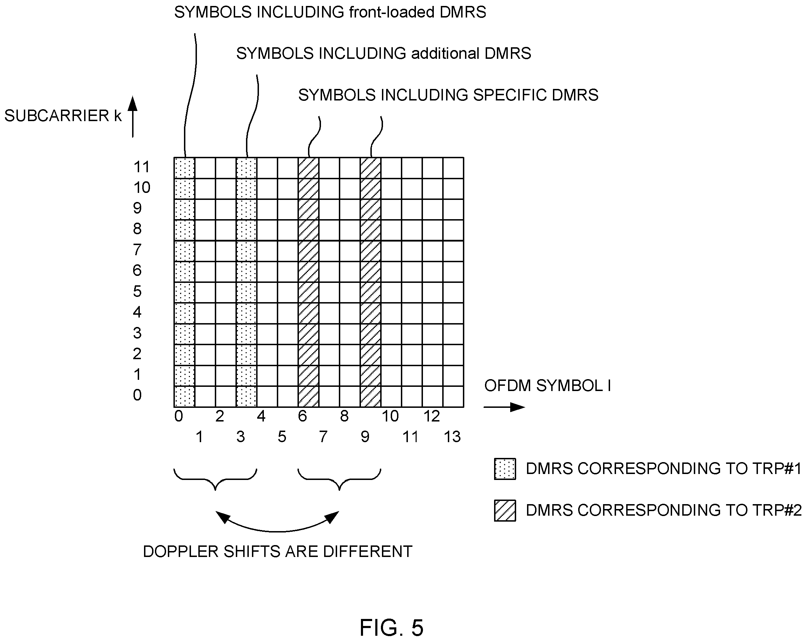

A symbol number (index or position) for a specific DMRS may be explicitly configured. In the example of Fig. 5, a specific DMRS may be configured in Symbols #6 and #9. The symbol number may be an index from the head symbol of the scheduled PDSCH or may be an index from the head symbol of the slot.

The symbol number of the specific DMRS may not be explicitly configured. For example, when additional DMRSs of 3 symbols are configured according to Rel. 15, a front-loaded DMRS of Symbol #0 and additional DMRSs of Symbols #3, #6, and #9 are arranged. If the DMRS in this aspect is arranged in these 4 symbols, the UE may be configured with an additional DMRS for Symbol #3 according to Rel. 15. In this case, the UE may assume the front-loaded DMRS of Symbol #0 and the additional DMRS of Symbol #3, further assume specific DMRSs of Symbols #6 and #9, assume that the Doppler shifts of Symbols #6 and #9 are different from the Doppler shifts of Symbols #0 and #3, and receive these DMRSs (front-loaded DMRS, additional DMRS, or specific DMRS).

The UE may assume that the Doppler shift of the second TRP-specific DMRS is different from the Doppler shift of the first TRP-specific DMRS. When use of a specific DMRS (TRP-specific DMRS) is configured and DMRSs of a plurality of symbols are configured, a first half of the plurality of symbols may be a first TRP-specific DMRS, and a second half of the plurality of symbols may be a second TRP-specific DMRS.

If Rel. 15/16 front-loaded/additional DMRSs are configured, the UE may assume the same number of symbols of specific DMRSs as the configured DMRSs. If a front-loaded DMRS/additional DMRS of Rel. 15/16 is configured, the UE may determine the arrangement of the front-loaded DMRS/additional DMRSs and the particular DMRS according to a DMRS arrangement of Rel. 15/16 with the number of symbols that is twice the number of symbols of the configured DMRS.

### <<Aspect 3-3>>

It may be configured/indicated that the Doppler shift of the specific symbol is different from the Doppler shifts of other symbols among the DMRSs of the plurality of symbols set according to Rel. 15/16.

That the Doppler shift of the specific symbol is different from the Doppler shifts of other symbols may be configured for the PDSCH DMRS in the PDSCH configuration or may be configured for the PDCCH DMRS in the PDCCH configuration. For the PDSCH DMRS, it may be dynamically configured/indicated by a combination of the higher layer and the scheduling DCI that the Doppler shift of the specific symbol is different from the Doppler shifts of other symbols.

It may be configured/indicated that the Doppler shift is different between the front-loaded DMRS and the additional DMRS in Rel. 15.

In Rel. 15, a DMRS multiplexing capacity is increased by applying a double symbol DMRS and applying a time domain orthogonal cover code (OCC). The front-loaded DMRS that is a double symbol DMRS is mapped to two consecutive symbols. The number of additional DMRSs is 0 or 1, and the additional DMRSs are also mapped to two consecutive symbols. If the Doppler shift (channel) is different within the application range of the time domain OCC, orthogonality of the time domain OCC collapses, and thus, it is not possible to appropriately multiplex DMRSs (increase the number of DMRS ports) by the time domain OCC.

Therefore, in a case where the Doppler shifts are different between the first symbol and the second symbol of the double symbol DMRS, the time domain OCC may not be applied to the double symbol DMRS, or only a specific OCC (for example, [+1, +1]) may be applied. The DMRS of the first symbol of the double symbol DMRS may be called a normal DMRS (first DMRS), and the DMRS of the second symbol may be called a specific DMRS (second DMRS).

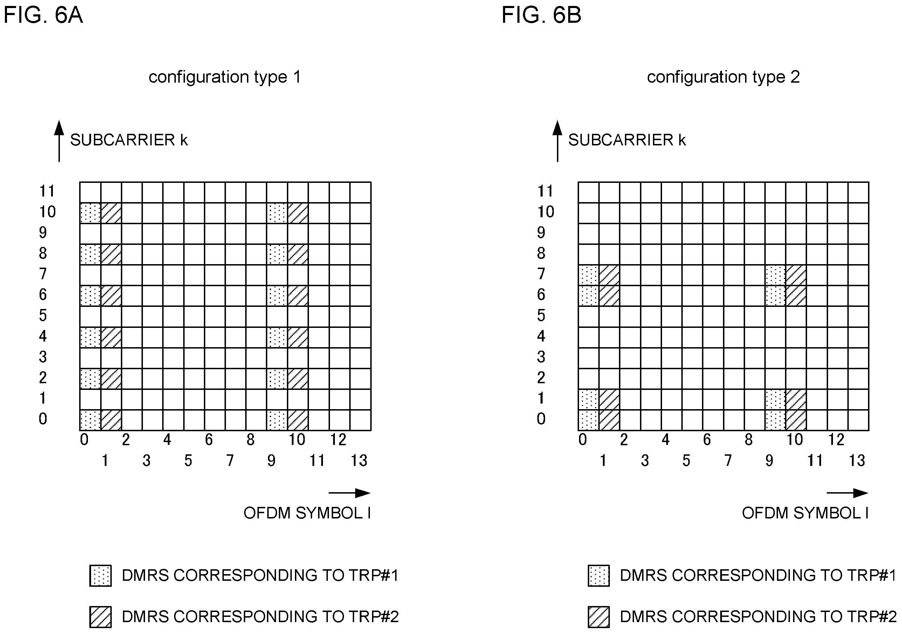

In the example of Fig. 6A, a double symbol DMRS of DMRS Type 1 (configuration type 1) is mapped to Symbols #0 and #1, and an additional DMRS is mapped to Symbols #9 and #10. Symbols #1 and #10 correspond to TRP #1 (transmitted from TRP #1), and Symbols #0 and #9 correspond to TRP #2 (transmitted from TRP #2). The Doppler shifts of Symbols #1 and #10 are different from the Doppler shifts of Symbols #0 and #9.

In the example of Fig. 6B, a double symbol DMRS of DMRS Type 2 (configuration type 2) is mapped to Symbols #0 and #1, and an additional DMRS is mapped to Symbols #9 and #10. Symbols #1 and #10 correspond to TRP #1 (transmitted from TRP #1), and Symbols #0 and #9 correspond to TRP #2 (transmitted from TRP #2). The Doppler shifts of Symbols #1 and #10 are different from the Doppler shifts of Symbols #0 and #9.

The UE may assume that the Doppler shift of the second TRP-specific DMRS is different from the Doppler shift of the first TRP-specific DMRS. When use of a specific DMRS (TRP-specific DMRS) is configured and DMRSs of a plurality of symbols are configured, odd-numbered (first, third, ...) symbols may be first TRP-specific DMRSs, and even-numbered (second, fourth, ...) symbols may be second TRP-specific DMRSs.

The number of DMRS ports in a case where the Doppler shifts are different between the first symbol and the second symbol of the double symbol DMRS may be smaller than the number of DMRS ports of Rel. 15/16 (may be halved from the number of Rel. 15/16 DMRS ports).

When the time domain OCC of Rel. 15/16 is applied, a maximum number of DMRS ports is 8 for DMRS Type 1, and a maximum number of DMRS ports is 12 for DMRS Type 2. When the time domain OCC is not applied, a maximum number of DMRS ports may be 4 for DMRS Type 1, and a maximum number of DMRS ports may be 6 for DMRS Type 2.

According to the third embodiment described above, the UE can appropriately receive the DMRS.

### <Fourth Embodiment>

In Scheme 1/2, the UE assumes a plurality of QCLs for one DMRS port of the PDSCH/PDCCH.

A plurality of TCI states may be configured/indicated for one CORESET for the PDCCH by the RRC/MAC CE.

Two PDCCHs may respectively correspond to two TCI states (two TRPs). The same DCI may be transmitted by the two PDCCHs. In this case, the UE may receive two PDCCHs by using two TCI states (QCL) or may receive one PDCCH by using one TCI state (QCL).

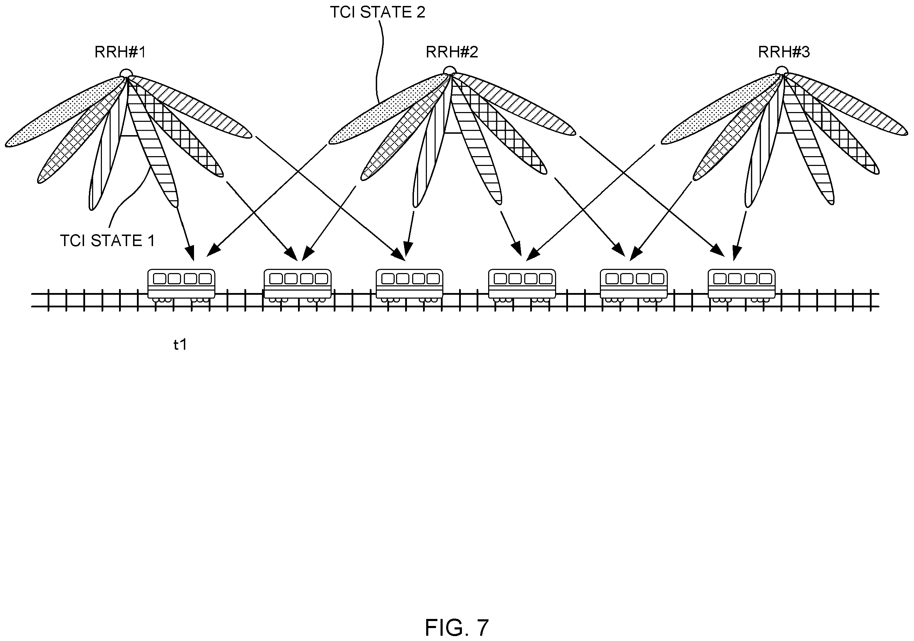

In the example of Fig. 7, the UE at time t1 assumes a TCI state 1 for RRH #1 and a TCI state 2 for RRH #2 for a DMRS port of a given CORESET/PDSCH.

One MAC CE may configure/indicate one TCI state. Each MAC CE may have a flag. For example, if the MAC CE with the flag = 0 indicates the TCI state #1 of the PDCCH and the MAC CE with the flag = 1 indicates the TCI state #2 of the PDCCH, the UE may receive the PDCCH assuming both the TCI states #1 and #2. Thereafter, if the MAC CE with the flag = 0 indicates the TCI state #3 of the PDCCH, the UE may receive the PDCCH assuming both TCI states #3 and #2 by updating the TCI states corresponding to the same value of the flag. A specific bit (field) in the MAC CE for indicating a PDCCH TCI state may indicate the release of the TCI state corresponding to each value of the flag. The specific bit may be a reserved bit (R).

A plurality of TCI states may be configured/indicated for one PDSCH by RRC/MAC CE/DCI.

Two PDCCHs may respectively correspond to two TCI states (two TRPs). The same DL data (transport block and code block group) may be transmitted by the two PDSCHs. In this case, the UE may receive two PDSCHs by using two TCI states (QCL) or may receive one PDSCH by using one TCI state (QCL). The UE may generate one piece of HARQ-ACK information (bits and HARQ-ACK codebook) for the two PDSCH and transmit the HARQ-ACK information.

A plurality of TCI states may be configured for one PDSCH by using a TCI state indication method in multi-TRPs based on a single DCI in Rel. 16.

According to the Extended TCI State Activation/Deactivation MAC CE for PDSCH (Enhanced TCI States Activation/Deactivation for UE-specific PDSCH MAC CE) in Rel. 16, one or two TCI states per codepoint of the TCI field in the DCI may be activated, and one codepoint may be indicated by the TCI field in the DCI.

If the in-DCI TCI presence parameter (TCI-PresentInDCI) is not configured, or if the time offset (scheduling offset) from the DCI to the PDSCH is less than or equal to a threshold value, the UE may assume the lowest codepoint (TCI codepoint) with two active TCI states in the DCI field of the TCI as the TCI state (default TCI state and two default TCI states) of the PDSCH, as in Rel. 16.

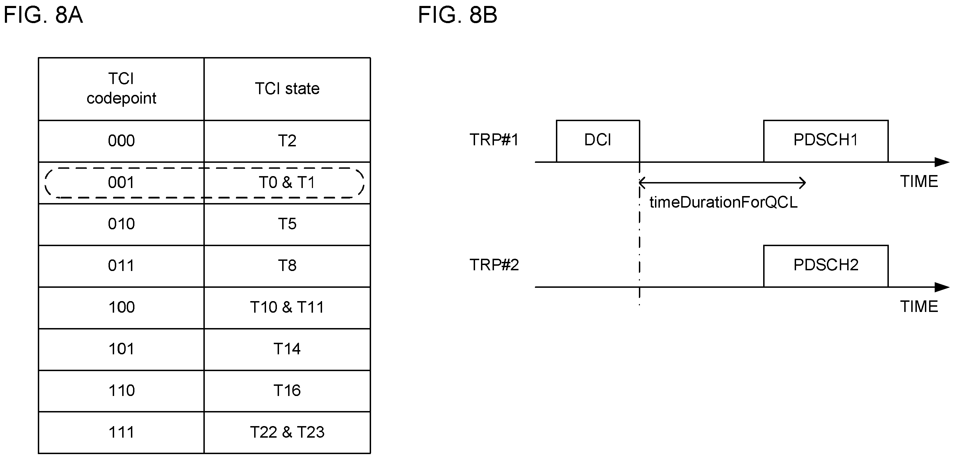

In the example of Fig. 8A, multiple TCI states are set by RRC and the TCI states for each codepoint in the TCI field are activated by the MAC CE (for example, Enhanced TCI States Activation/Deactivation for UE-specific PDSCH MAC CE). In the example of Fig. 8B, the DCI schedules PDSCH1 from TRP1 and PDSCH from TRP2. If the time offset between the DCI and the PDSCHs 1 and 2 is less than the threshold (timeDurationForQCL), the UE uses the two active TCI states (T0 and T1) for the lowest code point (001) of the TCI codepoints with the two active TCI states for reception of the PDSCHs 1 and 2, respectively.

To operate Scheme 2, the UE may assume that multiple TCI states are activated at at least one codepoint in the DCI field of the TCI.

According to the fourth embodiment described above, the UE can appropriately determine the TCI state of the PDCCH/PDSCH.

### <Other Embodiments>

A UE capability corresponding to at least one function (feature) in the first to fourth embodiments may be defined. In a case where the UE has reported the UE capability, the UE may perform the corresponding function. In a case where the UE has reported the UE capability and is configured with a higher layer parameter corresponding to this function, the UE may perform the corresponding function. A higher layer parameter (RRC information element) corresponding to this function may be defined. In a case where the higher layer parameter is configured, the UE may perform the corresponding function.

The UE capability may indicate whether the UE supports this function.

The UE capability may indicate whether to support HST.

The UE capability may indicate whether to support Scheme 1/2.

The UE capability may indicate a maximum number of QCLs configured for the same DMRS port.

In at least one of the first to fourth embodiments, a maximum number of QCLs configured for the same DMRS port may be two. In the specification, a maximum number of QCLs configured for the same DMRS port may be more than two.

Both Scheme 1 and Scheme 2 are defined in the specification, and Scheme 1 or Scheme 2 may be indicated/switched by the higher layer.

According to the above embodiment, the UE can realize the above functions while maintaining compatibility with existing specifications.

### (Radio Communication System)

Hereinafter, a configuration of a radio communication system according to one embodiment of the present disclosure is described. In this radio communication system, communication is performed using any one or a combination of the radio communication methods according to the embodiments of the present disclosure.

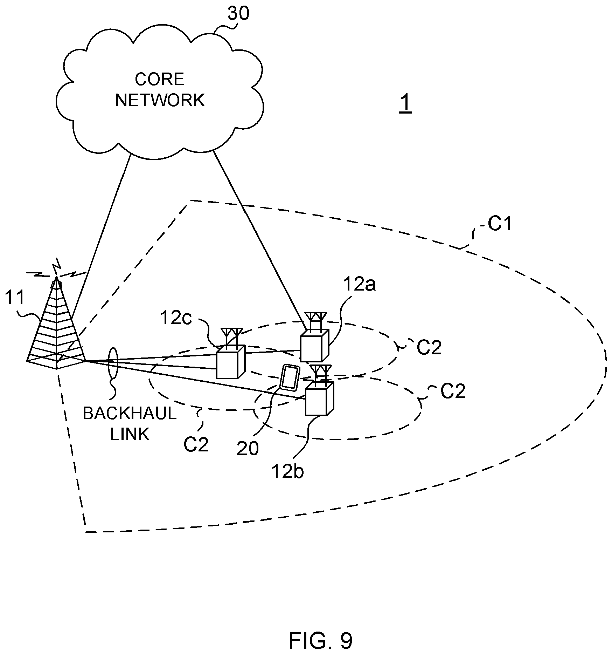

Fig. 9 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is an SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are arranged in the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively called a "base station 10", unless these are distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range (frequency range 1 (FR1)) and a second frequency range (frequency range 2 (FR2)). The macro cell C1 may be included in FR1, and the small cells C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of the FR1 and FR2 are not limited thereto, and, for example, FR1 may correspond to a frequency range higher than FR2.

Further, the user terminal 20 may perform communication on each CC using at least one of time division duplex (TDD) and frequency division duplex (FDD).

The plurality of base stations 10 may be connected to each other in a wired manner (for example, an optical fiber, an X2 interface, or the like in compliance with the common public radio interface (CPRI)) or in a wireless manner (for example, NR communication). For example, when NR communication is used as a backhaul between the base stations 11 and 12, the base station 11 corresponding to a higher-level station may be called an integrated access backhaul (IAB) donor, and the base station 12 corresponding to a relay station (relay) may be called an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be called a waveform. Note that, in the radio communication system 1, another radio access method (for example, another single carrier transmission method or another multi-carrier transmission method) may be used as the UL and DL radio access methods.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. The PUSCH may transmit the user data, higher layer control information, and the like. Furthermore, the PBCH may transmit a master information block (MIB).

Lower layer control information may be transmitted on the PDCCH. The lower layer control information may include, for example, downlink control information (DCI) including scheduling information of at least one of the PDSCH and the PUSCH.

Note that, the DCI for scheduling the PDSCH may be called DL assignment, DL DCI, or the like, and the DCI for scheduling the PUSCH may be called UL grant, UL DCI, or the like. Note that, the PDSCH is interchangeable with DL data, and the PUSCH is interchangeable with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a given search space based on search space configuration.

One search space may correspond to a PDCCH candidate corresponding to one or more aggregation levels. One or more search spaces may be called a search space set. Note that the terms "search space", "search space set", "search space configuration", "search space set configuration", "CORESET", "CORESET configuration", and the like in the present disclosure are interchangeable.

Uplink control information (UCI) including at least one of channel state information (CSI), delivery acknowledgement information (which may be called, for example, hybrid automatic repeat request acknowledgement (HARQ-ACK), ACK/NACK, or the like), and scheduling request (SR) may be transmitted on the PUCCH. A random access preamble for establishing connection with a cell may be transmitted on the PRACH.

Note that, in the present disclosure, downlink, uplink, and the like may be expressed without "link". Furthermore, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS or SSS) and the PBCH (and the DMRS for the PBCH) may be called an SS/PBCH block, an SS block (SSB), or the like. Note that, the SS, the SSB, or the like may also be called a reference signal.

Furthermore, in the radio communication system 1, a sounding reference signal (SRS), a demodulation reference signal (DMRS), or the like may be transmitted as an uplink reference signal (UL-RS). Note that, DMRS may be called a UE-specific reference signal.

### (Base Station)

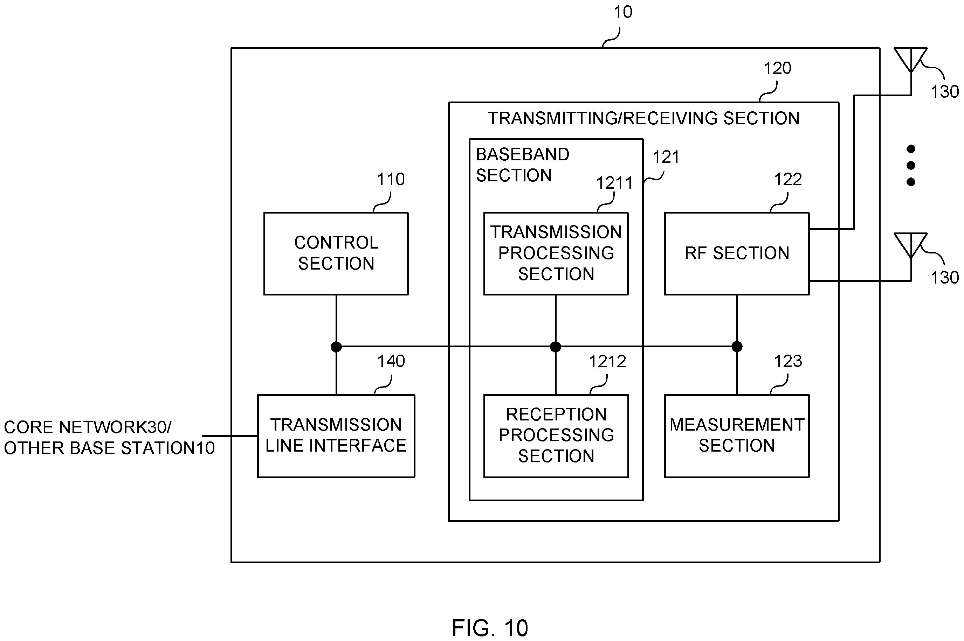

Fig. 10 is a diagram illustrating an example of a configuration of a base station according to one embodiment. The base station 10 includes a control section 110, a transmitting/receiving section 120, a transmitting/receiving antenna 130, and a transmission line interface 140. Note that one or more control sections 110, one or more transmitting/receiving sections 120, one or more transmitting/receiving antennas 130, and one or more transmission line interfaces 140 may be provided.

Note that, although this example mainly describes functional blocks of a characteristic part of the present embodiment, it may be assumed that the base station 10 includes other functional blocks that are necessary for radio communication as well. A part of processing performed by each section described below may be omitted.

The control section 110 controls the entire base station 10. The control section 110 can include a controller, a control circuit, and the like, which are described based on common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like and may forward the data, the control information, the sequence, and the like to the transmitting/receiving section 120. The control section 110 may perform call processing (such as configuration or releasing) of a communication channel, state management of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 120 may be configured as an integrated transmitting/receiving section or may include a transmitting section and a receiving section. The transmitting section may include a transmission processing section 1211 and the RF section 122. The receiving section may include a reception processing section 1212, the RF section 122, and the measurement section 123.

The transmitting/receiving antenna 130 can include an antenna, which is described based on common recognition in the technical field related to the present disclosure, for example, an array antenna.

The transmitting/receiving section 120 may transmit the above-described downlink channel, a synchronization signal, a downlink reference signal, and the like. The transmitting/receiving section 120 may receive the above-described uplink channel, an uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency range, filtering processing, amplification, and the like on the baseband signal, and may transmit a signal in the radio frequency range via the transmitting/receiving antenna 130.

Meanwhile, the transmitting/receiving section 120 (RF section 122) may perform amplification, filtering processing, demodulation to a baseband signal, and the like on the signal in the radio frequency range received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may perform transmission/reception of a signal (backhaul signaling) to/from an apparatus included in the core network 30, another base station 10, or the like and may perform acquisition, transmission, or the like of user data (user plane data), control plane data, and the like for the user terminal 20.

Note that, the transmitting section and the receiving section of the base station 10 in the present disclosure may include at least one of the transmitting/receiving section 120, the transmitting/receiving antenna 130, and the transmission line interface 140.

The transmitting/receiving section 120 may transmit a first higher layer parameter indicating a resource of the first tracking reference signal (TRS) and a second higher layer parameter indicating a resource of the second TRS. The control section 110 may control transmission of at least one of the first TRS and the second TRS. The quasi-co-location relationship between the first TRS and the second TRS may not include the Doppler shift.

### (User Terminal)

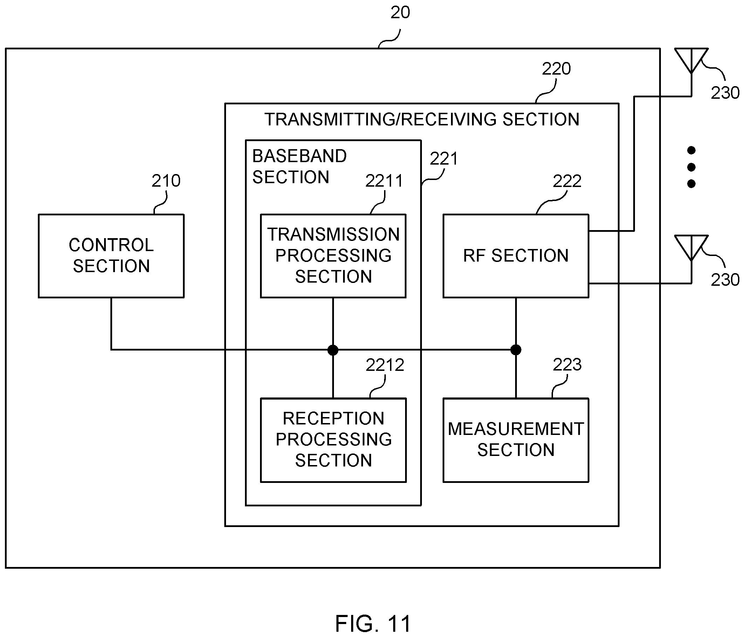

Fig. 11 is a diagram illustrating an example of a configuration of a user terminal according to one embodiment. The user terminal 20 includes a control section 210, a transmitting/receiving section 220, and a transmitting/receiving antenna 230. Note that, one or more control sections 210, one or more transmitting/receiving sections 220, and one or more transmitting/receiving antennas 230 may be included.

Note that, although this example mainly describes functional blocks of a characteristic part of the present embodiment, it may be assumed that the user terminal 20 includes other functional blocks that are necessary for radio communication as well. A part of processing performed by each section described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data, control information, a sequence, and the like to be transmitted as signals and may forward the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 220 may be formed as an integrated transmitting/receiving section or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna described based on common recognition in the technical field related to the present disclosure, for example, an array antenna.

The transmitting/receiving section 220 may receive the above-described downlink channel, a synchronization signal, a downlink reference signal, and the like. The transmitting/receiving section 220 may transmit the above-described uplink channel, an uplink reference signal, and the like.

The transmitting/receiving section 220 may form at least one of a transmission beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that, whether or not to apply DFT processing may be determined based on configuration of transform precoding. If transform precoding is enabled for a channel (for example, PUSCH), the transmitting/receiving section 220 (transmission processing section 2211) may perform DFT processing as the transmission processing to transmit the channel by using a DFT-s-OFDM waveform, and if not, DFT processing does not have to be performed as the transmission processing.

The transmitting/receiving section 220 (RF section 222) may perform modulation to a radio frequency range, filtering processing, amplification, and the like on the baseband signal, to transmit a signal in the radio frequency range via the transmitting/receiving antenna 230.

Meanwhile, the transmitting/receiving section 220 (RF section 222) may perform amplification, filtering processing, demodulation to a baseband signal, and the like on the signal in the radio frequency range received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may be constituted by at least one of the transmitting/receiving section 220 or the transmitting/receiving antenna 230.

The transmitting/receiving section 220 may receive a first higher layer parameter indicating a resource of a first tracking reference signal (TRS) (existing TRS, first TRP-specific TRS) and a second higher layer parameter indicating a resource of a second TRS (specific TRS, second TRP-specific TRS). The control section 210 may control reception of at least one of a physical downlink control channel (PDCCH) and a physical downlink shared channel (PDSCH) based on the first TRS and the second TRS (for example, an estimation result of the channel/Doppler shift based on the first TRS and the second TRS). The quasi-co-location relationship (QCL relationship or QCL type) between the first TRS and the second TRS may not include the Doppler shift.

The first higher layer parameter indicates a non-zero power channel state information reference signal (NZP-CSI-RS) resource set of Release 15, and the second higher layer parameter may be a parameter different from the NZP-CSI-RS resource set of Release 15 (first and second embodiments).

The transmitting/receiving section 220 may receive a first demodulation reference signal (DMRS) (existing DMRS or first TRP-specific DMRS) for the physical downlink shared channel and a second DMRS (specific DMRS or second TRP-specific DMRS) for the physical downlink shared channel. The quasi-co-location relationship between the first DMRS and the second DMRS may not include the Doppler shift (third embodiment).

The transmitting/receiving section 220 may receive configuration or indication of a plurality of transmission configuration indicator (TCI) states for any of one DMRS port, one control resource set, and the physical downlink shared channel (fourth embodiment).

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by using a single apparatus physically or logically aggregated or may be implemented by connecting two or more physically or logically separate apparatuses directly or indirectly (by wire or wirelessly, for example) and using these apparatuses. The functional block may be implemented by combining the one or a plurality of apparatuses with software.

Here, functions include, but are not limited to, deciding, determining, judging, computing, calculating, processing, deriving, investigating, searching, asgivening, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning, and the like. For example, a functional block (component section) that implements a transmission function may be called a transmitting section (transmitting unit), a transmitter, and the like. In any case, as described above, the implementation method is not particularly limited.

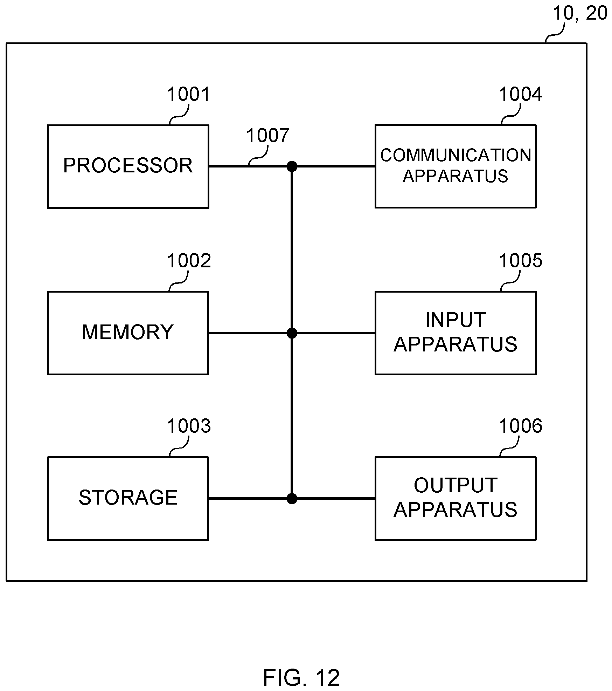

For example, the base station, the user terminal, and the like according to one embodiment of the present disclosure may function as a computer that executes the processing of the radio communication method of the present disclosure. Fig. 12 is a diagram illustrating an example of a hardware configuration of the base station and the user terminal according to one embodiment. Physically, the base station 10 and the user terminal 20 described above may be configured as a computer apparatus that includes a processor 1001, a memory 1002, a storage 1003, a communication apparatus 1004, an input apparatus 1005, an output apparatus 1006, a bus 1007, and the like.

Note that, in the present disclosure, the terms such as an apparatus, a circuit, a device, a section, and a unit are interchangeable. The hardware configuration of the base station 10 and the user terminal 20 may be configured including one or a plurality of the apparatuses illustrated in the drawings or may be configured without including some apparatuses.

For example, although only one processor 1001 is illustrated, there may be a plurality of processors. Further, the processing may be executed by one processor, or the processing may be executed by two or more processors simultaneously or sequentially, or using other methods. Note that, the processor 1001 may be implemented with one or more chips.

For example, each function of the base station 10 and user terminal 20 is implemented by causing given software (program) to be read onto hardware such as the processor 1001 and the memory 1002, so that the processor 1001 performs the arithmetic operation to control communication via the communication apparatus 1004 and controls at least one of reading or writing of data in the memory 1002 and storage 1003.

The processor 1001 may control the whole computer by, for example, running an operating system. The processor 1001 may be implemented by a central processing unit (CPU) including an interface with peripheral equipment, a control apparatus, an operation apparatus, a register, and the like. For example, at least part of the control section 110 (210), the transmitting/receiving section 120 (220), and the like described above may be implemented by the processor 1001.

Furthermore, the processor 1001 reads a program (program code), a software module, data, and the like from at least one of the storage 1003 or the communication apparatus 1004 into the memory 1002, and executes various types of processing in accordance with these. As the program, a program that causes a computer to execute at least a part of the operations described in the above embodiments is used. For example, the control section 110 (210) may be implemented by a control program that is stored in the memory 1002 and operates in the processor 1001, and another functional block may be implemented similarly.

The memory 1002 is a computer-readable recording medium, and may be configured with, for example, at least one of a read only memory (ROM), an erasable programmable ROM (EPROM), an electrically EPROM (EEPROM), a random access memory (RAM), or other appropriate storage media. The memory 1002 may be called a register, a cache, a main memory (primary storage apparatus), and the like. The memory 1002 may store a program (program code), a software module, and the like executable for implementing the radio communication method according to an embodiment of the present disclosure.

The storage 1003 is a computer-readable recording medium and may include, for example, at least one of a flexible disk, a floppy (Registered Trademark) disk, a magneto-optical disk (for example, a compact disc ROM (CD-ROM)), a digital versatile disk, a Blu-ray (Registered Trademark) disk), a removable disk, a hard disk drive, a smart card, a flash memory device (for example, a card, a stick, or a key drive), a magnetic stripe, a database, a server, or other appropriate storage media. The storage 1003 may be called a "secondary storage device".

The communication apparatus 1004 is hardware (transmitting/receiving device) for performing inter-computer communication via at least one of a wired network or a wireless network, and is called, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmitting/receiving antenna 130 (230), and the like described above may be implemented by the communication apparatus 1004. The transmitting/receiving section 120 (220) may be implemented by being physically or logically separated into a transmitting section 120a (220a) and a receiving section 120b (220b).

The input apparatus 1005 is an input device for receiving input from the outside (for example, a keyboard, a mouse, a microphone, a switch, a button, a sensor, or the like). The output apparatus 1006 is an output device that performs output to the outside (for example, a display, a speaker, a light emitting diode (LED) lamp, or the like). Note that the input apparatus 1005 and the output apparatus 1006 may have an integrated configuration (for example, a touch panel).

Furthermore, apparatuses such as the processor 1001 and the memory 1002 are connected to each other by the bus 1007 for communicating information. The bus 1007 may be formed by using a single bus or may be formed by using different buses for respective connections between apparatuses.

Further, the base station 10 and the user terminal 20 may be configured to include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware.

### (Modifications)

Note that terms described in the present disclosure and terms necessary for understanding the present disclosure may be replaced with terms that have the same or similar meanings. For example, a channel, a symbol, and a signal (signal or signaling) are interchangeable. Further, a signal may be a message. The reference signal can be abbreviated as an RS, and may be called a pilot, a pilot signal, and the like, depending on which standard applies. Further, a component carrier (CC) may be called a cell, a frequency carrier, a carrier frequency, and the like.

A radio frame may include one or a plurality of periods (frames) in a time domain. Each of the one or more periods (frames) that configure the radio frame may be called a subframe. Further, the subframe may include one or more slots in the time domain. The subframe may have a fixed time length (for example, 1 ms) that does not depend on numerology.

Here, the numerology may be a communication parameter that is applied to at least one of transmission and reception of a given signal or channel. For example, the numerology may indicate at least one of SubCarrier Spacing (SCS), a bandwidth, a symbol length, a cyclic prefix length, a transmission time interval (TTI), the number of symbols per TTI, a radio frame configuration, specific filter processing performed by a transceiver in the frequency domain, or specific windowing processing performed by a transceiver in the time domain.

The slot may include one or more symbols in the time domain (orthogonal frequency division multiplexing (OFDM) symbols, single carrier frequency division multiple access (SC-FDMA) symbols, and the like). Also, a slot may be a time unit based on numerology.

The slot may include a plurality of mini slots. Each mini slot may include one or more symbols in the time domain. Further, the mini slot may be called a sub-slot. Each mini slot may include fewer symbols than slots. A PDSCH (or PUSCH) transmitted in a time unit larger than the mini slot may be called "PDSCH (PUSCH) mapping type A". A PDSCH (or PUSCH) transmitted using the mini slot may be called a PDSCH (PUSCH) mapping type B.

A radio frame, a subframe, a slot, a mini slot, and a symbol all represent a time unit when transmitting a signal. The radio frame, the subframe, the slot, the mini slot, and the symbol may be called by other applicable names, respectively. Note that, time units such as a frame, a subframe, a slot, a mini slot, and a symbol in the present disclosure are interchangeable.

For example, one subframe may be called a TTI, a plurality of consecutive subframes may be called a TTI, or one slot or one mini slot may be called a TTI. That is, at least one of the subframe and the TTI may be a subframe (1 ms) in the existing LTE, may be a period shorter than 1 ms (for example, one to thirteen symbols), or may be a period longer than 1 ms. Note that, the unit indicating the TTI may be called the slot, mini slot, and the like instead of the subframe.

Here, the TTI refers to, for example, the minimum time unit of scheduling in the radio communication. For example, in the LTE system, a base station performs scheduling to allocate radio resources (a frequency bandwidth, transmission power, and the like that can be used in each user terminal) to each user terminal in TTI units. Note that, definition of the TTI is not limited to this.

The TTI may be a transmission time unit of channel-encoded data packet (transport block), code block, codeword, and the like or may be a processing unit of scheduling, link adaptation, and the like. Note that, when the TTI is given, a time interval (for example, the number of symbols) to which the transport block, the code block, the codeword, and the like are actually mapped may be shorter than the corresponding TTI.

Note that, when one slot or one mini slot is called the TTI, one or more TTIs (that is, one or more slots or one or more mini slots) may be the minimum time unit of scheduling. Furthermore, the number of slots (the number of mini slots) forming the minimum time unit of the scheduling may be controlled.

A TTI having a time length of 1 ms may be called a usual TTI (TTI in 3GPP Rel. 8 to 12), a normal TTI, a long TTI, a usual subframe, a normal subframe, a long subframe, a slot, and the like. A TTI that is shorter than the usual TTI may be called a shortened TTI, a short TTI, a partial TTI (or fractional TTI), a shortened subframe, a short subframe, a mini slot, a sub-slot, a slot, and the like.

Note that, long TTI (for example, usual TTI and a subframe) is interchangeable with TTI having a time length longer than 1 ms, and short TTI (for example, shortened TTI) is interchangeable with TTI having a TTI length shorter than the TTI length of the long TTI and a TTI length of 1 ms or longer.

A resource block (RB) is the unit of resource allocation in the time domain and the frequency domain and may include one or more consecutive subcarriers in the frequency domain. The number of subcarriers included in the RB may be the same regardless of the numerology and may be twelve, for example. The number of subcarriers included in the RB may be determined based on the numerology.

Furthermore, the RB may include one or a plurality of symbols in the time domain and have the length of one slot, one mini slot, one subframe, or one TTI. One TTI, one subframe, and the like may include one or a plurality of resource blocks.

Note that one or a plurality of RBs may be called a physical resource block (PRB), a sub-carrier group (SCG), a resource element group (REG), a PRB pair, an RB pair, and the like.

Furthermore, a resource block may include one or a plurality of resource elements (REs). For example, one RE may be a radio resource field of one subcarrier and one symbol.

A bandwidth part (BWP) (which may be called a partial bandwidth, or the like) may represent a subset of consecutive common resource blocks (RBs) for a given numerology in a given carrier. Here, the common RB may be specified by the index of the RB based on a common reference point of the corresponding carrier. The PRB may be defined in a given BWP and numbered within the corresponding BWP.

The BWP may include a UL BWP (BWP for UL) and a DL BWP (BWP for DL). For the UE, one or a plurality of BWPs may be configured within one carrier.

At least one of the configured BWPs may be active, and it is not necessary to assume that the UE transmits and receives a given signal/channel outside the active BWP. Note that, the terms "cell", "carrier", and the like in the present disclosure are interchangeable with "BWP".

Note that the structures of radio frames, subframes, slots, mini slots, symbols, and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Furthermore, the information and parameters described in the present disclosure may be represented in absolute values, represented in relative values with respect to given values, or represented using other corresponding information. For example, the radio resource may be indicated by a given index.

The names used for the parameters and the like in the present disclosure are not limited names in any respect. Further, any mathematical expression or the like that uses these parameters may differ from those explicitly disclosed in the present disclosure. Because various channels (PUCCH, PDCCH, and the like) and information elements can be identified by any suitable names, various names allocated to these various channels and information elements are not restrictive names in any respect.

The information, signals, and the like described in the present disclosure may be represented using any of various different technologies. For example, data, instruction, a command, information, a signal, a bit, a symbol, a chip, and the like that may be referred to throughout the above description may be represented by a voltage, a current, an electromagnetic wave, a magnetic field, a magnetic particle, a photo field, a photon, or any combination thereof.

Furthermore, the information, signals, and the like may be output in at least one of a direction from a higher layer to a lower layer and a direction from a lower layer to a higher layer. The information, signals, and the like may be input and output via a plurality of network nodes.

The information, signals, and the like that are input and output may be stored in a specific location (for example, in a memory) or may be managed using a management table. The information, signals, and the like to be input and output can be overwritten, updated, or appended. The output information, signals, and the like may be deleted. The information, signals, and the like that are input may be transmitted to other apparatuses.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), other signals, or a combination thereof.

Note that the physical layer signaling may be called Layer 1/Layer 2 (L1/L2) control information (L1/L2 control signal), L1 control information (L1 control signal), and the like. Further, the RRC signaling may be called an RRC message and may be, for example, an RRC connection setup message, an RRC connection reconfiguration message, and so on. Further, the MAC signaling may be notified by using, for example, a MAC control element (CE).

Furthermore, notification of given information (for example, notification of "being X") does not necessarily have to be explicit and may be performed implicitly (for example, by not giving notification of the given information or by notification of other information).

Judging may be performed by a one-bit value (0 or 1), by a boolean indicated by true or false, or by comparison of numerical values (for example, comparison with a given value).

Regardless of whether software is called software, firmware, middleware, microcode, or hardware description language or referred to by other names, this should be interpreted broadly, to mean an instruction, an instruction set, a code, a code segment, a program code, a program, a subprogram, a software module, an application, a software application, a software package, a routine, a subroutine, an object, an executable file, an execution thread, a procedure, a function, and the like.

In addition, software, instructions, information, and the like may be transmitted and received via a transmission medium. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" may be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station is sometimes called using terms such as a macro cell, a small cell, a femto cell, or a pico cell.

The base station can accommodate one or a plurality of (for example, three) cells. In a case where the base station accommodates a plurality of cells, the entire coverage area of the base station can be partitioned into a plurality of smaller areas, and each smaller area can provide communication services through a base station subsystem (for example, a small base station for indoors (remote radio head (RRH))). The term "cell" or "sector" refers to a part or the entire coverage area of at least one of the base station and the base station subsystem that performs a communication service in this coverage.

As used in the present disclosure, the terms such as "mobile station (MS)", "user terminal", "user equipment (UE)", and "terminal" may be used interchangeably.

A mobile station may be called a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be called a transmission apparatus, a reception apparatus, a radio communication apparatus, and the like. Note that at least one of the base station or the mobile station may be a device mounted on a moving object, a moving object itself, and the like. The moving object may be a transportation (for example, a car or an airplane), an unmanned moving object (for example, a drone or an autonomous car), or a (manned or unmanned) robot. Note that at least one of the base station or the mobile station also includes an apparatus that does not necessarily move during a communication operation. For example, at least one of the base station and the mobile station may be an Internet of Things (IoT) device such as a sensor.

Further, a base station in the present disclosure is interchangeable with a user terminal. For example, each aspect/embodiment of the present disclosure may be applied to a configuration in which communication between the base station and the user terminal is replaced with communication among a plurality of user terminals (may be called, for example, device-to-device (D2D) or vehicle-to-everything (V2X)). In this case, the user terminal 20 may have the function of the base station 10 described above. Further, terms such as "uplink" and "downlink" are interchangeable with terms corresponding to communication between terminals (for example, "side"). For example, an uplink channel, a downlink channel, and the like are interchangeable with a side channel.

Similarly, a user terminal in the present disclosure is interchangeable with a base station. In this case, the base station 10 may have the function of the user terminal 20 described above.

In the present disclosure, an operation performed by the base station may also be performed by an upper node thereof in some cases. In a network including one or a plurality of network nodes with base stations, it is clear that various kinds of operations performed for communication with a terminal can be performed by a base station, one or a plurality of network nodes (examples of which include but are not limited to mobility management entity (MME) and serving-gateway (S-GW)) other than the base station, or a combination thereof.

Each aspect/embodiment described in the present disclosure may be used alone, used in a combination, and switched in association with execution. Further, the order of processing procedures, sequences, flowcharts, and the like of the aspects/embodiments described in the present disclosure may be re-ordered as long as there is no inconsistency. For example, regarding the method described in the present disclosure, elements of various steps are presented using an exemplary order, and the order is not limited to the presented specific order.

Each aspect/embodiment described in the present disclosure may be applied to a system using Long-Term Evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or decimal)), Future Radio Access (FRA), New-Radio Access Technology (RAT), New Radio (NR), New radio access (NX), Future generation radio access (FX), Global System for Mobile communications (GSM (Registered Trademark)), CDMA 2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), or another appropriate radio communication method, a next generation system expanded based on the foregoing, and the like. Further, a plurality of systems may be combined (for example, a combination of LTE or LTE-A and 5G, and the like) and applied.

The term "based on" used in the present disclosure does not mean "only based on" unless otherwise specified. In other words, the term "based on" means both "only based on" and "at least based on".

Reference to elements with designations such as "first", "second", and the like used in the present disclosure does not generally limit the quantity or order of those elements. These designations can be used in the present disclosure, as a convenient way of distinguishing between two or more elements. Thus, the reference to the first and second elements does not mean that only two elements may be adopted nor that the first element must precede the second element in a given manner.

The term "determining" used in the present disclosure may include a wide variety of operations. For example, with respect to the "determining", judging, calculating, computing, processing, deriving, investigating, looking up, search, inquiry (for example, looking up in a table, database, or another data structure), ascertaining, and the like may be regarded as "determining".

Furthermore, with respect to the "determining", receiving (for example, receiving information), transmitting (for example, transmitting information), input, output, accessing (for example, accessing to data in a memory), and the like may be regarded as "determining".

Furthermore, with respect to the "determining", resolving, selecting, choosing, establishing, comparing, and the like may be regarded as "determining". In other words, with respect to the "determining", any kind of operation may be regarded as "determining".

Furthermore, the term "determining" is interchangeable with "assuming", "expecting", "considering", and the like.

The "maximum transmission power" described in the present disclosure may mean the maximum value of the transmission power, may mean the nominal UE maximum transmit power, or may mean the rated UE maximum transmit power.

The terms "connected" and "coupled", or any variation thereof used in the present disclosure mean all direct or indirect connections or coupling between two or more elements and can include the presence of one or more intermediate elements between the two elements that are "connected" or "coupled" to each other. The coupling or connection between the elements may be physical, logical, or a combination of these. For example, the term "connection" is interchangeable with "access".

In the present disclosure, when two elements are connected, these elements can be considered to be "connected" or "coupled" to each other by using one or more electrical wires, cables, printed electrical connections, and the like, and by using, as some non-limiting and non-inclusive examples, electromagnetic energy, and the like having a wavelength in the radio frequency domain, the microwave domain, and the optical (both visible and invisible) domain.

In the present disclosure, the phrase "A and B are different" may mean that "A and B are different from each other". Note that the corresponding phrase may mean that "A and B each are different from C". The terms such as "separated", "coupled", and the like may be interpreted in a similar manner to that of "being different".

In a case where terms such as "include", "including", and variations of these are used in the present disclosure, these terms are intended to be inclusive like the term "comprising" is. Moreover, the term "or" used in the present disclosure is intended not to be exclusive-OR.

In the present disclosure, for example, in a case where translations add articles, such as a, an, and the in English, the present disclosure may include that a noun that follows these articles is in a plural form.

Although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined based on the description of claims. Consequently, the description of the present disclosure is provided only for the purpose of explaining examples, and should by no means be construed to limit the invention according to the present disclosure in any way.

## Claims

1. A terminal comprising:
a receiving section that receives a first higher layer parameter indicating a resource of a first tracking reference signal (TRS) and a second higher layer parameter indicating a resource of a second TRS; and
a control section that controls reception of at least one of a physical downlink control channel and a physical downlink shared channel based on the first TRS and the second TRS, wherein
a quasi-co-location relationship between the first TRS and the second TRS does not include a Doppler shift.

2. The terminal according to claim 1, wherein
the first higher layer parameter indicates a non-zero power channel state information reference signal (NZP-CSI-RS) resource set of Release 15, and the second higher layer parameter is a parameter different from the NZP-CSI-RS resource set of Release 15.

3. The terminal according to claim 1 or 2, wherein
the receiving section receives a first demodulation reference signal (DMRS) for the physical downlink shared channel and a second DMRS for the physical downlink shared channel, and
a quasi-co-location relationship between the first DMRS and the second DMRS does not include the Doppler shift.

4. The terminal according to any one of claims 1 to 3, wherein
the receiving section receives configuration or indication of a plurality of transmission configuration indicator (TCI) states for any of one DMRS port, one control resource set, and the physical downlink shared channel.

5. A radio communication method of a terminal, comprising:
receiving a first higher layer parameter indicating a resource of a first tracking reference signal (TRS) and a second higher layer parameter indicating a resource of a second TRS; and
controlling reception of at least one of a physical downlink control channel and a physical downlink shared channel based on the first TRS and the second TRS, wherein
a quasi-co-location relationship between the first TRS and the second TRS does not include a Doppler shift.

6. A base station comprising:
a transmitting section that transmits a first higher layer parameter indicating a resource of a first tracking reference signal (TRS) and a second higher layer parameter indicating a resource of a second TRS; and
a control section that controls transmission of at least one of the first TRS and the second TRS, wherein
a quasi-co-location relationship between the first TRS and the second TRS does not include a Doppler shift.
